# EUROPÄISCHE PATENTSCHRIFT

(11) **EP 1 240 426 B1**
(45) Veröffentlichungstag und Bekanntmachung des Hinweises auf die Patenterteilung: **29.09.2004**
(21) Anmeldenummer: 00991098.5
(22) Anmeldetag: 19.12.2000
(51) Int. Cl.: F03D 1/00

(54) **OFFSHORE-WINDENERGIEANLAGE MIT SUBSYSTEME AUFNEHMENDEN AUSTAUSCHBAREN CONTAINERN**
OFFSHORE WIND POWER INSTALLATION COMPRISING INTERCHANGEABLE CONTAINERS FOR HOUSING SUBSYSTEMS
INSTALLATION D'ENERGIE EOLIENNE DE HAUTE MER COMPRENANT DES CONTENEURS RECEVANT DES SOUS-SYSTEMES

(30) Priorität: 22.12.1999 DE 19962453
(43) Veröffentlichungstag der Anmeldung: 18.09.2002
(73) Patentinhaber: Aerodyn Engineering GmbH, 24768 Rendsburg (DE)
(72) Erfinder: SIEGFRIEDSEN, Sönke, 25840 Friedrichstadt (DE)
(74) Vertreter: Biehl, Christian, Dipl.-Phys.
(86) Internationale Anmeldenummer: PCT/DE2000/004519
(87) Internationale Veröffentlichungsnummer: WO 2001/046583

(56) Entgegenhaltungen:
- WO-A-98/32968
- US-A- 4 311 434
- US-A- 5 182 458
- ENRON WIND PRODUCTS: "2.0 MW Offshore wind turbine: Technical drawings" WEBSEITE VON ENRON WIND CORP., [Online] XP002165334 Gefunden im Internet: <URL:http://www.wind.enron.com/PRODUCTS/20 /20drawings.htm> [gefunden am 2001-04-12] -& PHOTO: GUNNAR BRITSE: "Utgrunden Offshore, Sweden, Enron Wind: The Container" WEBSEITE WINDPOWERPHOTOS, [Online] XP002165335 Gefunden im Internet: <URL:http://www.windpowerphotos.com/WPp269 .html> [gefunden am 2001-04-12]
- "Vindkraft i Torsås kommun" WEBSEITE DER SCHWEDISCHEN STADT TORSÅS, [Online] XP002165336 Gefunden im Internet: <URL:http://www.torsas.se/kommun/vindkraft /bilder/P0012955.jpg> [gefunden am 2001-04-12] -& NETLINK: "Svenskt vindkraftprojekt blir amerikanskt" WEBSEITE NETLINK, [Online] XP002165337 Gefunden im Internet: <URL:http://www.netlink.se/dynatt/9904/990 420/99042006.html> [gefunden am 2001-04-12]
- XP001059295

## Beschreibung

Die Erfindung betrifft eine Offshore-Windenergieanlage mit einem Turm, einem Rotorkopf, wenigstens einem Rotorblatt und elektrischen Subsystemen, wie einer Schalteinrichtung, einer Trafostation, einem Wechselrichter oder der Steuerung.

Bei Windenergieanlagen werden die elektrischen Subsysteme aber ggf. auch Wärmetauscher, die die Wärme ins Meerwasser abführen üblicherweise entweder innerhalb des Turmes oder aber in separaten Gebäuden, die neben dem Turm auf dem Windenergieanlagen-Fundament oder auf eigenen Fundamenten aufgestellt werden, untergebracht.

Die Unterbringung im Turm ist die kostengünstigste Lösung, da kein zusätzlicher schützender Behälter bereitgestellt werden muß. Der bei Ausfall einer größeren Komponente erforderliche Austausch ist dabei aber problematisch, da die Türöffnungen in den Türmen aus statischen Überlegungen so klein wie möglich ausgeführt werden, und die Komponenten nur in kleineren Einzelteilen in den Turm ein- und ausgebracht werden können. Die Unterbringung der Subsysteme in separaten kleinen Gebäuden erlaubt zwar eine gute Zugänglichkeit der Komponenten, setzt aber ein besonderes Fundament für das Gebäude voraus. Beide Lösungen sind für Offshore-Windenergieanlagen ungeeignet.

Der Erfindung liegt die Aufgabe zugrunde, eine Offshore-Windenergieanlage zu schaffen, bei der das Problem der Anordnung der elektrischen Subsysteme in geeigneter Weise gelöst ist.

Die elektrischen Subsysteme sind in wenigstens einem an der Außenseite des Turms der Windenergieanlage austauschbar angesetzten Behälter untergebracht, wobei der Behälter vorzugsweise nach Abmessungen und Befestigungspunkten wie ein üblicher Container ausgebildet ist. Die erforderlichen Kabel, Leitungen oder sonstigen Verbindungen mit den Elementen der Windenergieanlage selber werden mit schnell lösbaren Kupplungen oder dergleichen hergestellt. Eine entsprechende Windenergieanlage wurde bei der "SUSTAIN '99 - THE WORLD SUSTAINABLE ENERGY FAIR" in Amsterdam (NL) am 25. Mai 1999 von Tacke Windenergie GmbH in der Broschüre "The TW 2.0 Offshore : Technical Description" vorgestellt.

Erfindungsgemäß ist der Container unter ein geeignetes Traggerüst gehängt. Im Fall einer größeren Störung des von einem Container aufgenommen Subsystems werden die Verbindungen gelöst, der Container mitsamt dem von ihm aufgenommenen Subsystem wird über ein Seilsystem auf ein geeignet ausgebildetes Schiff abgelassen und gegen einen Container, der ein funktionsfähiges Subsystem aufnimmt, getauscht.

Das Seilsystem ist vorteilhafter Weise so ausgeführt, daß alle vier Befestigungsseile über eine Antriebseinheit zum Absenken und Heben der Last betätigt werden können. Dabei ist es möglich, daß die Seile von den vier Befestigungspunkten zu einem Zentralpunkt in den Turm hineingeführt werden, wobei sie von dort aus gemeinsam von der Antriebseinheit betätigt werden.

Bei Verwendung eines Kranwagens der auf einem Kranrahmen radial verfährt, ist es möglich, den Container nicht nur senkrecht abzulassen, sondern diesen vor dem Ablassen in einem größeren Abstand zum Turm zu bringen. Die Antriebseinheit für das Seilsystem zum Absenken und Heben der Container kann dann auf dem Kranwagen angeordnet sein.

Die Erfindung wird im folgenden anhand einer Zeichnung erläutert. Dabei zeigt:
- Fig. 1: die Gesamtanlage mit den austauschbaren Containern im unteren Bereich des Turmes,
- Fig. 2: die räumliche Ansicht der Containerbefestigung mit einer Tragrahmenstruktur,
- Fig. 3: eine Schnittzeichnung mit der Komponentenanordnung der Containerbefestigung mit einer Tragrahmenstruktur,
- Fig. 4: eine räumliche Ansicht der Containerbefestigung mit einem Kranrahmen, der von einer Schutzverkleidung umgeben ist , und
- Fig. 5: den Schnitt der Ausbildung nach Fig. 4, in der Kranwagen, der auf einem Kranrahmen verfährt, erkennbar ist.

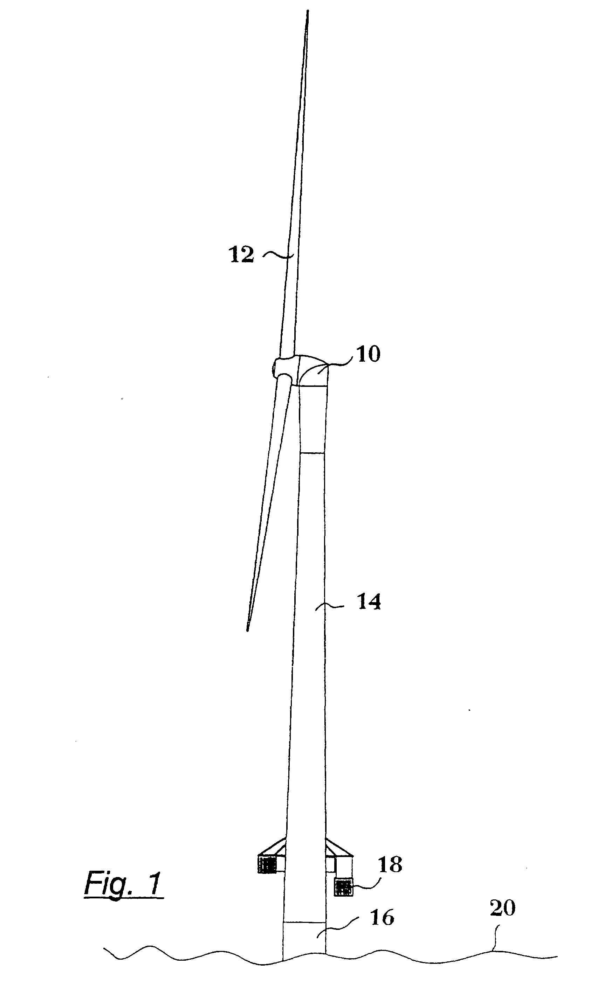

In Fig. 1 gibt eine Gesamtansicht der Offshore-Anlage mit dem Rotorkopf 10, den Rotorblättern 12, dem Turm 14, dem Gründungsbauteil 16 und dem Container 18 zur Unterbringung der Windenergieanlagen-Subsysteme wieder. Dabei wird der Container in einer Höhe über dem Wasserspiegel 20 angeordnet, das dieser durch die größte anzunehmende Welle nicht erreicht wird und ein Unterfahren mit einem einen Container aufnehmenden Schiff erlaubt.

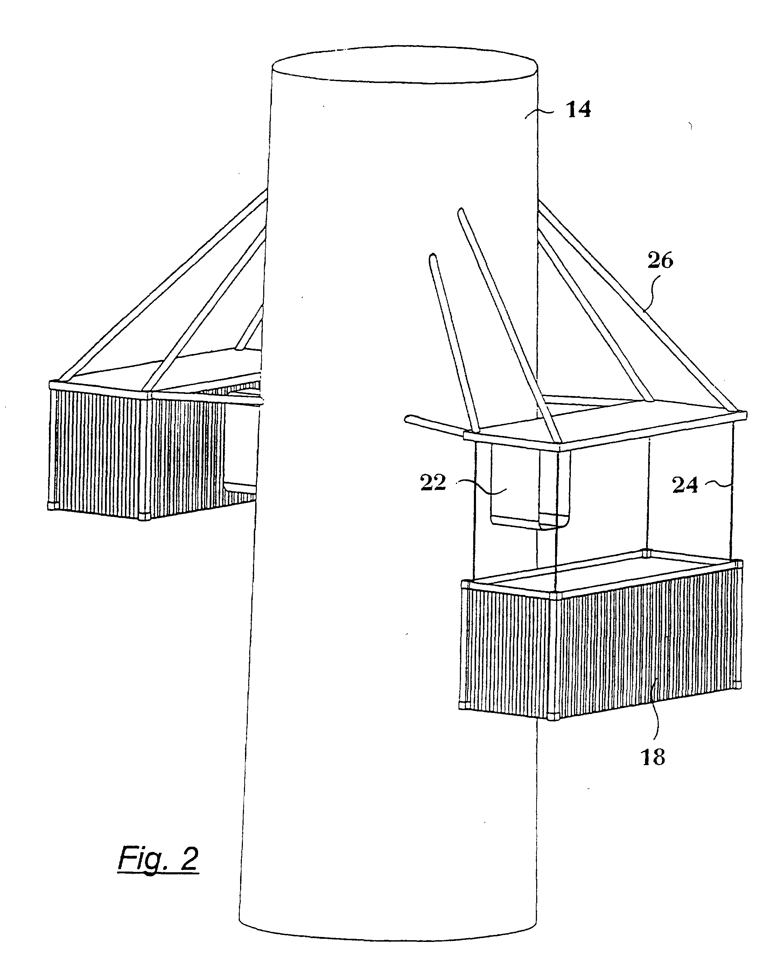

Die Fig. 2 gibt einen räumlichen Eindruck von einer Containerbefestigung über eine Tragrahmenstruktur 26, die dort mit dem Turm 14 verbunden ist. Der Contain kann über vier Seile 24 gehoben und abgesenkt werden. Im angehobenen Zustand wird der Container 18 mit Hilfe von Verbindungselementen fest mit der Tragrahmenstruktur 26 verbunden.

In diesem Zustand wird die Zugänglichkeit des Containers 18 über den Verbindungskanal 22 hergestellt. Geeignete Dichtungen gewährleisten den Witterungsschutz.

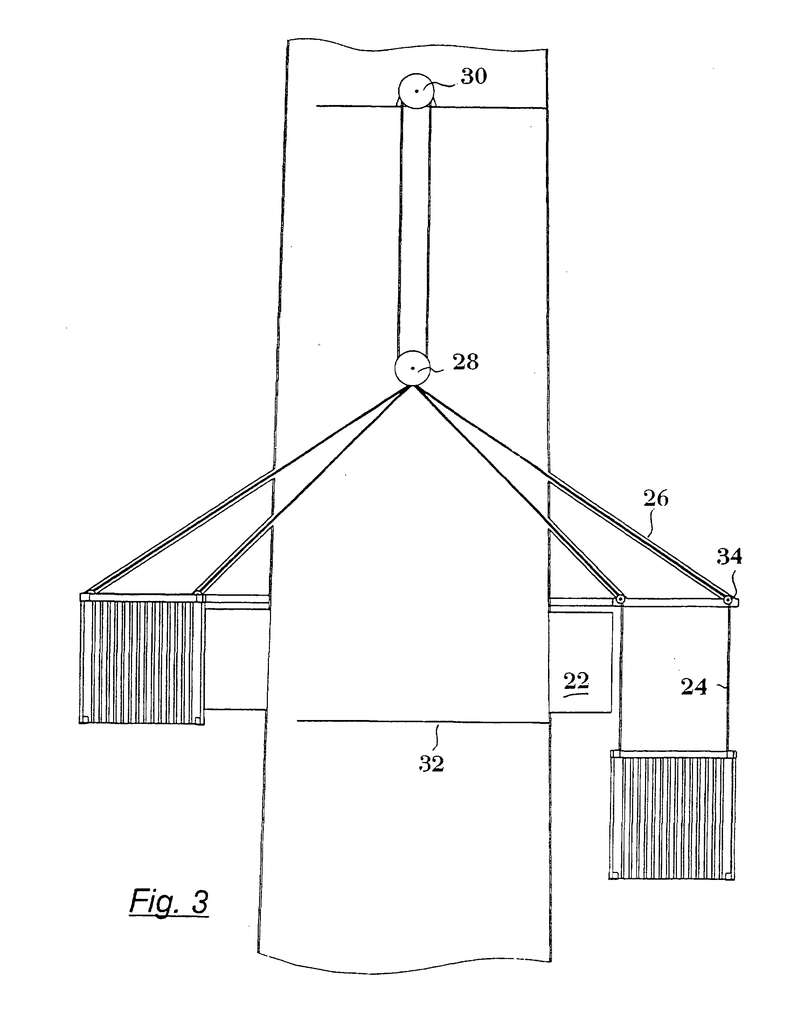

In der Schnittzeichnung der Fig. 3 ist zu erkennen, daß die Elemente der Tragrahmenstruktur 26 geometrisch im Raum so angeordnet sind, daß die vier Seile 24 nach der Umlenkung durch eine Rolle 34 auf einen gemeinsamen Verbindungspunkt geführt werde. An diesem Verbindungspunkt befinden sich Umlenkrollen 28, um die Seile parallel zur Antriebseinheit 30 zu führen. Über die Zwischenplattform 32 und den Verbindungskanal 22 ist der Container in angebebenen Zustand von Inneren des Turms zugänglich.

Die Kabel und Leitungen zwischen Turm und Container werden vor einem Absenken durch lösbare Verbindungen voneinander getrennt und die verbleibenden Öffnungen geschlossen.

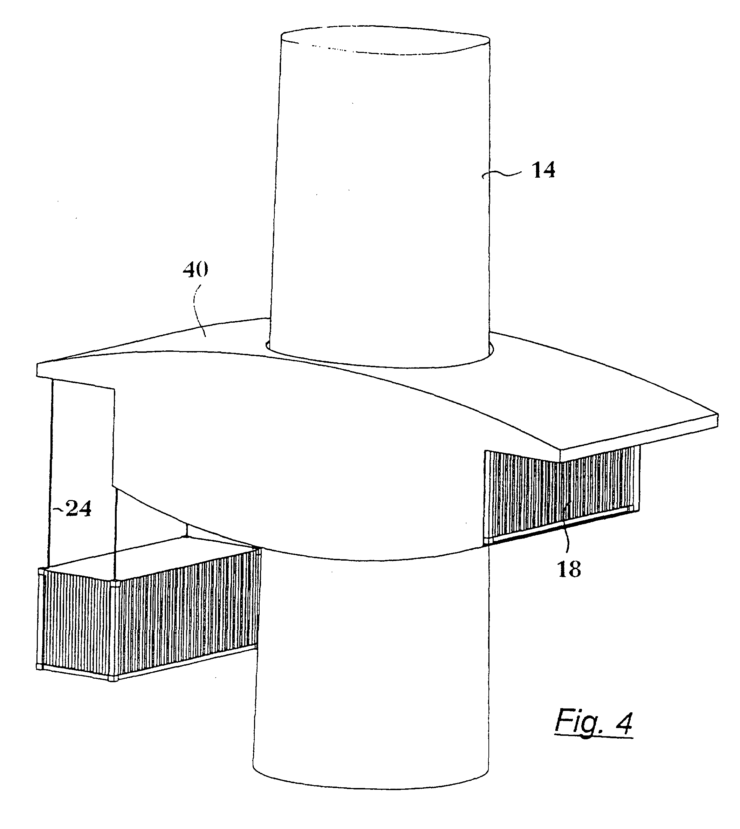

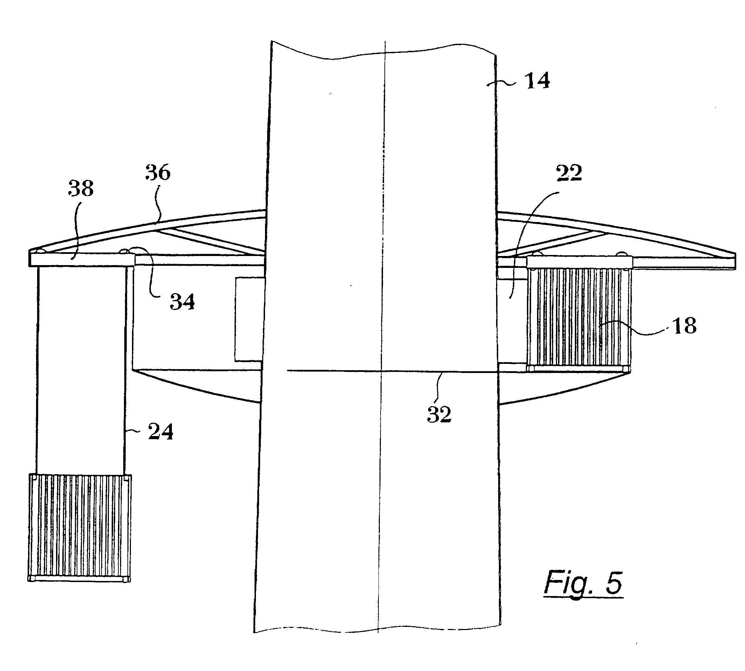

Fig. 4 zeigt die räumliche Ansicht eines Ausführungsbeispiels mit einem radial zum Turm verfahrbaren Kranwagen 38 (siehe Fig. 5), von dem der Container 18 auf ein Schiff abgelassen und von einem Schiff aufgenommen werden können. Dabei wird der Container 18 in angehobenen Zustand (rechte Seite der Figur) in eine Schutzverkleidung 40 eingefahren.

Fig. 5 zeigt dieses Ausführungsbeispiel im Schnitt. Es ist erkennbar, daß ein Kranwagen 38 auf dem Kranrahmen 36 radial zum Turm 14 über ein Rollsystem verschiebbar ist. Im angehobenen Zustand kann der Container 18 so in die Schutzverkleidung 40 eingefahren werden und der Zugang zum Container 18 dann über den Verbindungskanal 22 ermöglicht werden. Die vier Hebeseile mit den Umlenkrollen 34 und die Antriebseinheit sind dabei an dem Kranwagen 38 angeordnet.

## Patentansprüche

1. Offshore-Windenergieanlage mit einem Turm (14), einem Rotorkopf (10), wenigstens einem Rotorblatt (12) und Subsystemen wie einer Schalteinrichtung und/oder einer Trafostation, die in wenigstens einem an der Außenseite des Turms (14) der Windenergieanlage austauschbar angeordneten Behälter (18) untergebracht sind, **dadurch gekennzeichnet, daß**
der Behälter (18) von einer an den Turm (14) angesetzten Tragrahmenstruktur (26) abgehängt ist, und
in dem Turm (14) ein Seilsystem zum Ablassen und Austauschen des Behälters (18) vorgesehen ist.

2. Offshore-Windenergieanlage nach Anspruch 1, **dadurch gekennzeichnet, daß** der Behälter (18) nach Abmessungen und Befestigungspunkten wie ein handelsüblicher Container ausgebildet ist.

3. Offshore-Windenergieanlage nach Anspruch 1 oder 2, **gekennzeichnet durch** einen auf sich radial zum Turm (14) erstreckenden Schienen radial zum Turm verfahrbaren, den Behälter (18) über Seile (24) tragenden Kranwagen (38).

4. Offshore-Windenergieanlage nach einem der vorangehenden Ansprüche, **gekennzeichnet durch** eine den Behälter (18) in gehobenem Zustand aufnehmende Schutzverkleidung (40).

## Claims

1. Offshore wind power plant having a tower (14), a rotor head (10), at least one rotor blade (12) and subsystems such as switching equipment and/or a substation, which are housed in at least one container (18) positioned interchangeably on the outside of the tower (14) of the wind power plant, **characterized in that** the container (18) is suspended from a supporting framework structure (26) fitted to the tower (14), which contains a cable system for lowering and replacing the container (18).

2. Offshore wind power plant according to claim 1, **characterized in that** the container (18) is constructed on the basis of its dimensions and fixing points in the same way as a standard commercial container.

3. Offshore wind power plant according to claim 1 or 2, **characterized by** a crane truck (38) carrying the container (18) by means of cables (24) and movable radially with respect to the tower (14) by rails extending radially to said tower.

4. Offshore wind power plant according to one of the preceding claims, **characterized by** a protective cladding (40) receiving the container (18) in the raised state.

## Revendications

1. Installation d'énergie éolienne en mer comportant une tour (14), une tête de rotor (10), au moins une pale de rotor (12) et des sous-systèmes tels qu'un dispositif de commutation et/ou un poste de transformation qui sont logés dans au moins un conteneur (18) placé de manière échangeable sur la façade de la tour (14), **caractérisée par le fait**
**que** le conteneur (18) est suspendu à une structure à cadre porteur (26) attachée sur la tour (14) et
**qu'**il est prévu dans la tour (14) un système à câbles pour abaisser et échanger le conteneur (18).

2. Installation d'énergie éolienne en mer selon la revendication 1, **caractérisée par le fait que** le conteneur (18) est formé du point de vue des dimensions et des points de fixation comme un conteneur de type commercial.

3. Installation d'énergie éolienne en mer selon la revendication 1 ou 2, **caractérisée par** une grue mobile se déplaçant radialement à la tour sur des rails s'étendant radialement à la tour, portant le conteneur (18) au moyen de câbles (24).

4. Installation d'énergie éolienne en mer selon l'une des revendications précédentes, **caractérisée par** un habillage de protection (40) accueillant le conteneur (18) en position levée.
